# DEMANDE DE BREVET EUROPEEN

(11) **EP 3 214 734 A1**
(43) Date de publication de la demande: **06.09.2017**
(21) Numéro de dépôt: 17156881.9
(22) Date de dépôt: 20.02.2017
(51) Int. Cl.: H02K 3/12, H02K 3/28, H02K 15/085, H02K 15/06

(54) **STATOR DE MACHINE ELECTRIQUE TOURNANTE MUNI D'UN BOBINAGE À AU MOINS UN ENROULEMENT DE PHASE MASQUÉ**

(30) Priorité: 02.03.2016 FR 1651783
(71) Demandeur: VALEO EQUIPEMENTS ELECTRIQUES MOTEUR, 94046 Créteil Cedex (FR)
(72) Inventeur: WILQUIN, Geoffroy, 62560 Merck-Saint-Liévin (FR); DE-CLERCQ, Stéphane, 62180 RANG DU FLIERS (FR); RAMET, Vincent, 62630 ETAPLES (FR); LECLERCQ, Sébastien, 62650 HUMBERT (FR)
(74) Mandataire: Vaufleury, Guillaume

(57) **Abrégé**

L'invention porte principalement sur un stator de machine électrique tournante, notamment pour véhicule automobile, comportant:
- un corps de stator (11) ayant un axe central, ledit corps de stator (11) comportant un ensemble d'encoches (15),
- un bobinage bobiné dans lesdites encoches (15) dudit corps de stator (11) formant un premier chignon (231) et un second chignon (232) s'étendant axialement de part et d'autre dudit corps de stator (11),
caractérisé en ce qu'au moins un des enroulements de phase (PH1-PH3, PH1'-PH3') est un enroulement masqué lequel comprend toutes ses portions actives (20) de la couche (C1, CN) située à l'au moins une des extrémités radiales de chaque encoche (15) de la série prolongées chacune d'une part par une portion de liaison (21) correspondante du premier chignon (231) et d'autre part par une portion de liaison (21) correspondante du second chignon (232).

## Description

La présente invention porte sur un stator de machine électrique tournante muni d'un bobinage à au moins un enroulement de phase masqué.

L'invention trouve une application particulièrement avantageuse pour un stator d'une machine électrique tournante telle que par exemple un alternateur, un alterno-démarreur, ou un moteur électrique.

De façon connue en soi, les machines électriques tournantes comportent un stator et un rotor solidaire d'un arbre. Le rotor pourra être solidaire d'un arbre menant et/ou mené et pourra appartenir à une machine électrique tournante sous la forme d'un alternateur ou d'un moteur électrique.

Le rotor comporte un corps formé par un empilage de feuilles de tôles maintenues sous forme de paquet au moyen d'un système de fixation adapté, tel que des rivets traversant axialement le rotor de part en part. Le rotor comporte des pôles formés par exemple par des aimants permanents logés dans des cavités ménagées dans la masse magnétique du rotor. Alternativement, dans une architecture dite à pôles "saillants", les pôles sont formés par des bobines enroulées autour de bras du rotor.

Le stator comporte un corps constitué par un empilage de tôles minces ainsi qu'un bobinage des phases reçu dans des encoches du stator ouvertes vers l'intérieur. Les phases sont généralement au nombre de trois ou six. Dans les stators d'alternateurs de ce genre, les types de bobinages les plus couramment utilisés sont, d'une part, les bobinages dits "concentriques" constitués par des bobines enroulées autour des dents du stator, et d'autre part, les bobinages du type dit "ondulé", qui sont décrits par exemple dans le document FR2483702.

Le bobinage ondulé comporte une pluralité d'enroulements de phase formés chacun à partir d'au moins un conducteur électrique continu. Chaque enroulement comporte une pluralité de spires parcourant les encoches du corps de stator. Chaque enroulement comporte des portions de liaison situées alternativement de chaque côté du stator reliant entre elles des portions actives situés à l'intérieur des encoches du stator. Un ensemble de portions de liaison dépassant d'un côté du stator constitue un chignon du bobinage.

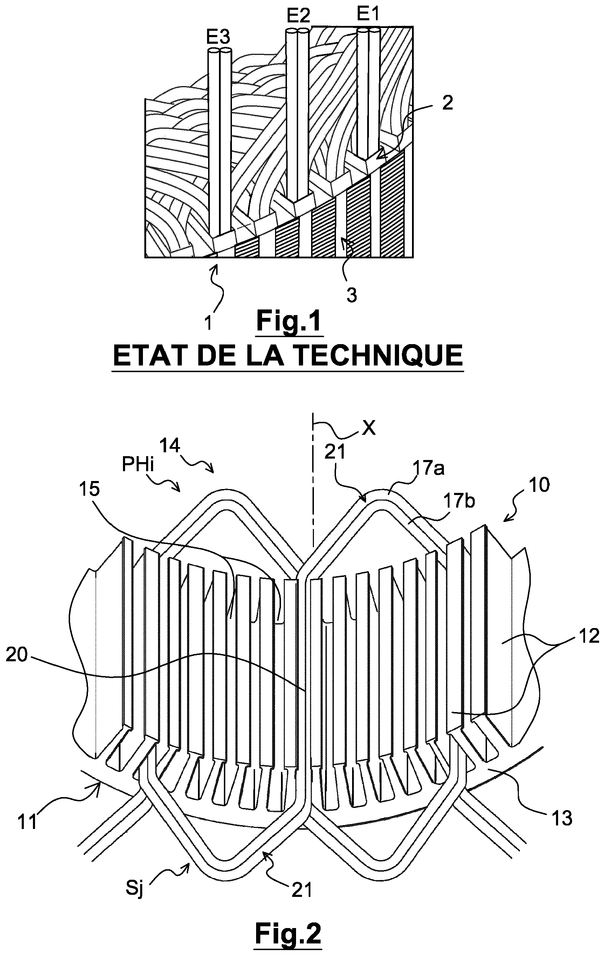

Le document FR2947968 enseigne la mise en oeuvre d'un procédé de bobinage in situ dans lequel l'ensemble des enroulements de phase sont bobinés en même temps et en parallèle dans les encoches correspondantes du corps du stator. Dans le cas d'un bobinage hexaphasé comportant deux systèmes triphasés, cela implique que les entrées des deux systèmes sont situées au niveau d'une périphérie interne du stator du fait de leur injection dans la première spire de bobinage. La figure 1 illustre ainsi le positionnement des entrées E1-E3 d'un système triphasé issues de portions actives 2 formant dans les encoches 3 les couches les plus proches de l'axe du stator 1. Par ailleurs, les sorties (non représentées) des deux systèmes obtenues à la fin du bobinage sont regroupées entre elles au niveau de la périphérie externe du stator.

Le problème est que, du fait de leur positionnement radial extrême, les entrées risquent d'interférer avec le rotor, tandis que les sorties peuvent potentiellement entrer en contact avec le palier de la machine électrique et causer des court-circuits. Afin d'éviter cela, il est connu de positionner les entrées et les sorties à l'intérieur de portions de liaison situées dans la partie intermédiaire des chignons de bobinage. Toutefois, ces opérations faites manuellement sont longues à réaliser et donc coûteuses en termes de main d'oeuvre.

L'invention vise à remédier efficacement à cet inconvénient en proposant un stator de machine électrique tournante, notamment pour véhicule automobile, comportant:
- un corps de stator ayant un axe central, ledit corps de stator comportant un ensemble d'encoches,
- un bobinage bobiné dans lesdites encoches dudit corps de stator formant un premier chignon et un second chignon s'étendant axialement de part et d'autre dudit corps de stator,
- ledit bobinage comportant des enroulements de phases dans lequel chaque enroulement de phase est formé par au moins un conducteur électrique continu passant dans une série d'encoches de l'ensemble, ledit enroulement de phase comprenant au moins deux spires,

- chaque enroulement de phase comportant:
   - des portions actives positionnées chacune dans une encoche de la série d'encoches, lesdites portions actives formant dans chaque encoche de la série des couches successives radiales,
   - des portions de liaison, chaque portion de liaison formant une partie d'un des chignons, chacune des portions de liaison s'étendant, hors des encoches, d'un seul côté dudit corps de stator, à partir de l'une des portions actives vers une autre portion active d'une encoche successive de la série d'encoches,
   - une première extrémité et une deuxième extrémité s'étendant à partir de l'une des portions actives, à l'extérieur des encoches,
caractérisé en ce que, au moins un des enroulements de phase est un enroulement masqué lequel comprend toutes ses portions actives de la couche située à l'au moins une des extrémités radiales de chaque encoche de la série prolongées chacune d'une part par une portion de liaison correspondante du premier chignon et d'autre part par une portion de liaison correspondante du second chignon.

Autrement dit, aucune des couches situées à l'une et/ou l'autre des d'extrémités radiales des encoches de la série ne comporte des portions actives se prolongeant dans une première ou une deuxième extrémité de phase hors de l'encoche.

L'invention permet ainsi de masquer une portion active prolongée par une extrémité de phase, ce qui évite que les entrées et/ou les sorties de phase ne puissent interférer avec le rotor ou entrent en contact avec le palier de la machine électrique. En outre, un tel positionnement des entrées et sorties des enroulements de phase pouvant être réalisé lors du bobinage, on supprime l'étape manuelle de mise en place des entrées et des sorties dans les chignons qui est coûteuse à réaliser.

Selon une réalisation, ledit bobinage comporte au moins un système comportant au moins trois enroulements masqués.

Selon une réalisation, ledit bobinage comporte au moins deux systèmes comportant chacun trois enroulements masqués.

Selon une réalisation, *les sorties de phases du premier sont décalés de 125 degrés des sorties de phases du deuxième système triphasés*

Selon une réalisation, *les sorties de phases du premier sont décalés de 125 degré moins ou plus N fois 30 degrés, des sorties de phases du deuxième système triphasés*.

Selon une réalisation, chaque enroulement masqué comporte au moins deux conducteurs électriques continus.

Selon une réalisation, le au moins un enroulement masqué comprend N couches dans chaque encoche, une première couche la plus éloignée dudit axe central et une Niéme couche la plus proche dudit axe central, au moins les deux extrémités du conducteur de l'enroulement de phase se prolongeant chacune à partir d'une portion active correspondante située entre la première couche comprise et la Niéme - 1 couche comprise.

Selon une réalisation, au moins un enroulement masqué est agencé pour que chaque encoche comporte une couche proche, dite dernière couche ou couche proche, qui est la couche la plus proche de l'axe central par rapport aux autres couches, et en ce que toutes les portions actives situées dans une couche proche sont prolongées chacune d'une part par une portion de liaison correspondante du premier chignon et d'autre part par une portion de liaison correspondante du second chignon.

Selon une réalisation, au moins un enroulement masqué est agencé pour que chaque encoche comporte une première couche, dite première couche ou couche éloignée, qui est la couche la plus éloignée de l'axe central par rapport aux autres couches dans une encoche, les portions actives situées dans les couches éloignées étant prolongées chacune d'une part par une portion de liaison correspondante du premier chignon et d'autre part par une portion de liaison correspondante du second chignon.

Selon une réalisation, chaque enroulement de phase comporte une portion de liaison située radialement entre deux portions de liaison de deux autres enroulements de phase.

Selon une réalisation, ledit bobinage est de type ondulé reparti. Cela permet d'améliorer les performances magnétiques du stator.

Selon une réalisation, ledit corps de stator est formé par un empilage de tôles.

Selon une réalisation, lesdites encoches sont à bord parallèles.

Selon un autre mode de réalisation que le précédent, lesdites encoches sont à bord trapèze.

Selon une réalisation, la portion active d'une phase qui s'étend de l'entrée Ei, appelée portion active cachée, est dans une encoche appelée encoche cachée, la portion de liaison s'étendant de la portion cachée est appelée portion de liaison d'entrée, la première portion active s'étendant de la portion de liaison d'entrée est dans une première encoche, dans lequel : la portion de liaison d'entrée se situe entre la portion active cachée et la première portion active , la seconde portion active qui s'étend de la première portion de liaison qui s'étend de la première portion active, se situe dans une seconde encoche et en ce que la première encoche se situe entre l'encoche cachée et la seconde encoche.

Selon un exemple de ce mode de réalisation, l'encoche cachée est la N eme encoche, N etant le nombre d'encoche d'une phase.

Selon un autre mode de réalisation que le mode de réalisation précédent décrit, la portion active d'une phase qui s'étend de l'entrée Ei, appelée portion active cachée, est dans une encoche appelée encoche cachée, la portion de liaison s'étendant de la portion cachée est appelée portion de liaison d'entrée, la première portion active s'étendant de la portion de liaison d'entrée est dans une première encoche, dans lequel : la portion de liaison d'entrée se situe entre la portion active cachée et la première portion active , la seconde portion active qui s'étend de la première portion de liaison qui s'étend de la première portion active, se situe dans une seconde encoche et en ce que la portion active cachée se situe dans la deuxième encoche.

L'invention a également pour objet une machine électrique tournante caractérisée en ce qu'elle comporte un stator tel que précédemment défini.

L'invention sera mieux comprise à la lecture de la description qui suit et à l'examen des figures qui l'accompagnent. Ces figures ne sont données qu'à titre illustratif mais nullement limitatif de l'invention.
La figure 1, déjà décrite, est une vue en perspective partielle illustrant le positionnement des entrées du côté interne extrême d'un stator bobiné selon l'état de la technique;
La figure 2 est une vue en perspective partielle de l'intérieur d'un stator dans lequel les conducteurs d'un enroulement de phase sont arrangés conformément à l'invention;
La figure 3 est une vue en perspective partielle illustrant le positionnement des entrées d'un système triphasé pour un stator bobiné selon la présente invention;
La figure 4 représente une vue en coupe linéaire du stator faisant apparaître le positionnement des entrées d'un système triphasé dans les couches radiales de conducteurs situées à l'intérieur des encoches du stator;
La figure 5 représente une vue en coupe linéaire du stator faisant apparaître le positionnement des sorties d'un système triphasé dans les couches radiales de conducteurs situées à l'intérieur des encoches du stator;
Les figures 6a à 6c représentent de manière schématique, suivant un développement linéaire d'une broche, les différentes étapes de bobinage permettant de masquer une entrée d'un enroulement de phase;
Les figures 7a à 7c représentent, suivant un développement linéaire d'une broche, les différentes étapes de bobinage permettant de masquer une sortie d'un enroulement de phase.

Les éléments identiques, similaires, ou analogues conservent la même référence d'une figure à l'autre.

La figure 2 est une vue en perspective partielle d'un stator 10 de machine électrique tournante qui comporte principalement un corps 11 dans lequel sont montés plusieurs enroulements de phase PH1-PH3, PH1'-PH3' formant un bobinage 14. Afin de faciliter la compréhension, un seul enroulement de phase PHi a été représenté sur la figure 2. La machine tournante est par exemple un alternateur ou un alterno-démarreur. Cette machine est de préférence destinée à être mise en oeuvre dans un véhicule automobile. On rappelle qu'un alterno-démarreur est une machine électrique tournante apte à travailler de manière réversible, d'une part, comme générateur électrique en fonction alternateur, et d'autre part comme moteur électrique, notamment pour démarrer le moteur thermique du véhicule automobile.

Le corps de stator 11 a une forme cylindrique annulaire d'axe central X et consiste en un empilement axial de tôles planes. Le corps 11 comporte des dents 12 réparties angulairement de manière régulière sur une circonférence interne d'une culasse 13. Ces dents 12 délimitent deux à deux des encoches 15. La culasse 13 correspond à la portion annulaire pleine du corps 11 qui s'étend entre le fond des encoches 15 et la périphérie externe du corps 11.

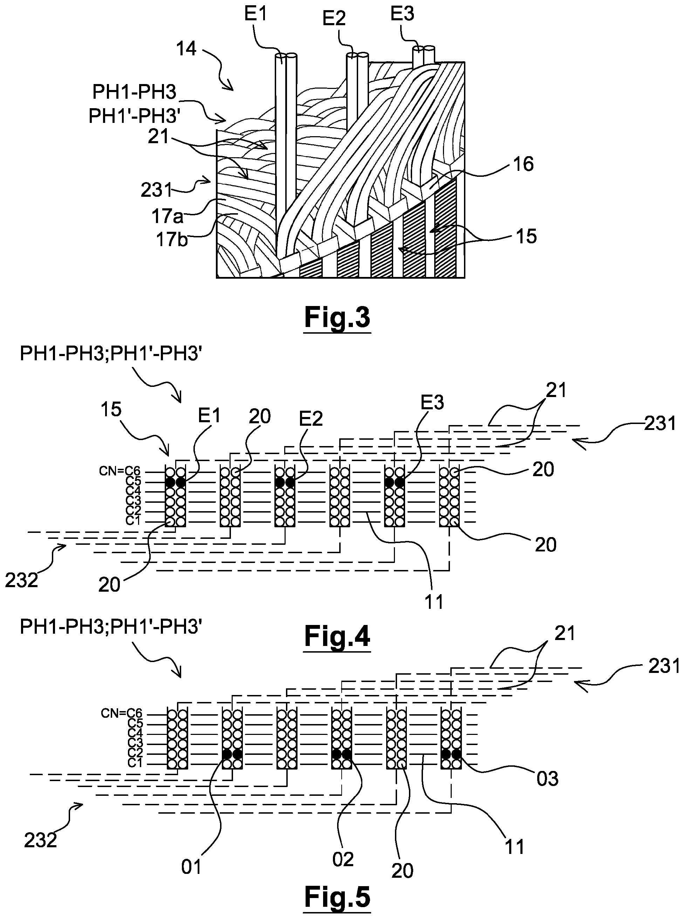

Les encoches 15 débouchent axialement de part et d'autre du corps 11. Les encoches 15 sont également ouvertes radialement dans la face interne du corps 11. Les encoches 15 sont de préférence à bords parallèles, c'est-à-dire que les faces internes des dents 12 en vis-à-vis l'une de l'autre sont parallèles entre elles. Les encoches 15 sont par exemple au nombre de 36, 48, 60, 72, 84, ou 96. Dans l'exemple de réalisation, le stator 10 comporte 72 encoches. Comme cela est mieux visible sur la figure 3, des isolants 16 sont disposés dans les encoches 15 du stator.

Pour former le bobinage 14 du stator 10, plusieurs enroulements de phase sont installés dans les encoches 15 du corps 11. En l'occurrence, le stator 10 "hexaphasé" comporte six enroulements de phase formé par deux systèmes triphasés PH1-PH3, PH1'-PH3' couplés entre eux. Le premier PH1-PH3 et le deuxième PH1'-PH3' système sont de préférence décalés entre eux de 125 degrés.

L'invention est cependant applicable à des stators 10 comportant un nombre différent d'enroulements de phase, comme par exemple à des bobinages pentaphasés (à cinq enroulements de phase) ou heptaphasés (à sept enroulements de phase).

Chaque enroulement de phase PHi est constitué ici par deux conducteurs continus 17a, 17b enroulés à l'intérieur du stator 10 dans les encoches 15 pour former une spire Sj. Chaque enroulement de phase PHi est formé de plusieurs spires Sj concentriques réalisant le bobinage 14 de la phase complète. Chaque enroulement de phase PHi comprend ainsi au moins deux spires Sj.

En variante, chaque enroulement de phase PHi est formé à partir d'un seul ou plus de deux conducteurs 17. En l'occurrence, les conducteurs 17a, 17b présente une section ronde. Alternativement, afin d'optimiser le remplissage des encoches 15, les conducteurs 17a, 17b pourront présenter une section rectangulaire ou carrée. Les conducteurs 17a, 17b sont de préférence réalisés en cuivre recouvert d'émail.

Chaque enroulement de phase PHi est associé à une série d'encoches 15 de l'ensemble d'encoches, de sorte que chaque encoche 15 reçoit plusieurs fois les conducteurs 17a, 17b d'une même phase. Deux encoches 15 consécutives d'une série sont séparées par des encoches adjacentes correspondant chacune à une autre série d'encoches 15 associée à l'un des autres enroulements de phase PH1-PH3, PH1'-PH3'. Ainsi, lorsqu'il y a K phases, les conducteurs 17a, 17b d'un même enroulement de phase PHi sont insérés toutes les K encoches 15.

Chaque enroulement de phase PHi comporte des portions actives 20 positionnées chacune dans une encoche 15 de la série d'encoches correspondantes. Comme on peut le voir sur les figures 4 et 5, les portions actives 20 forment dans chaque encoche 15 de la série N couches successives radiales C1-CN. On définit la première couche C1 comme étant la couche la plus éloignée de l'axe X et la Niéme couche comme étant la couche la plus proche radialement de l'axe X.

Chaque enroulement de phase PHi comporte également des portions de liaison 21 situées alternativement de chaque côté du stator 10 et reliant entre elles des portions actives 20 situées dans une série d'encoches associées à un enroulement de phase PHi donné. Ainsi, chaque portion de liaison 21 forme une partie d'un premier chignon 231 ou d'un deuxième chignon 232. Les deux chignons 231, 232 s'étendent axialement de part et d'autre du stator 10. Chacune des portions de liaison 21 s'étend, hors de l'encoche 15, d'un seul côté du corps de stator 11, à partir de l'une des portions actives 20 vers une autre portion active 20 d'une encoche 15 successive de la série d'encoches 15.

En outre, chaque enroulement de phase PHi comporte une première extrémité et une deuxième extrémité correspondant respectivement à une entrée Ei et une sortie Oi de phase s'étendant à partir de l'une des portions actives 20, à l'extérieur de l'encoche 15. Ces extrémités Ei, Oi sont aptes à être reliées à des bornes de la machine électrique.

Comme cela est bien visible sur les figures 3 et 4, chaque enroulement PHi est agencé de telle façon que toutes les portions actives 20 situées dans la Nième couche CN de chaque encoche 15 sont prolongées chacune d'une part par une portion de liaison 21 correspondante du premier chignon 231 et d'autre part par une portion de liaison 21 correspondante du second chignon 232.

En outre, comme cela est visible sur la figure 5, chaque enroulement PHi est agencé de telle façon que toutes les portions actives 20 situées dans la première couche C1 de chaque encoche 15 sont prolongées chacune d'une part par une portion de liaison 21 correspondante du premier chignon 231 et d'autre part par une portion de liaison 21 correspondante du second chignon 232.

Ainsi, les deux extrémités des conducteurs 17a, 17b de chaque enroulement de phase PHi, autrement dit l'entrée Ei et la sortie Oi, se prolongent chacune à partir d'une portion active 20 correspondante située entre la deuxième couche C2 comprise et la N-1 iéme couche comprise. Autrement dit, aucune des couches d'extrémité radiales ne comporte des portions actives 20 se prolongeant par une première ou une deuxième extrémité de phase Ei, Oi hors de l'encoche 15.

Alternativement, il y a N couche et l'entrée Ei et la sortie Oi de chaque enroulement de phase PHi se prolongent chacune à partir d'une portion active 20 correspondante située entre la première couche C1 comprise et la Nième - 1 couche CN comprise, dans le cas où seules les entrées Ei sont masquées. Autrement dit entre la première couche C1 comprise et la Nième couche non comprise.

Alternativement, il y a N couche et l'entrée Ei et la sortie Oi de chaque enroulement de phase PHi se prolongent chacune à partir d'une portion active 20 correspondante située entre la deuxième couche C2 comprise et la Nième couche CN comprise, dans le cas où seules les sortie Oi sont masquées. Autrement dit entre la première couche C1 non comprise et la Nième couche comprise.

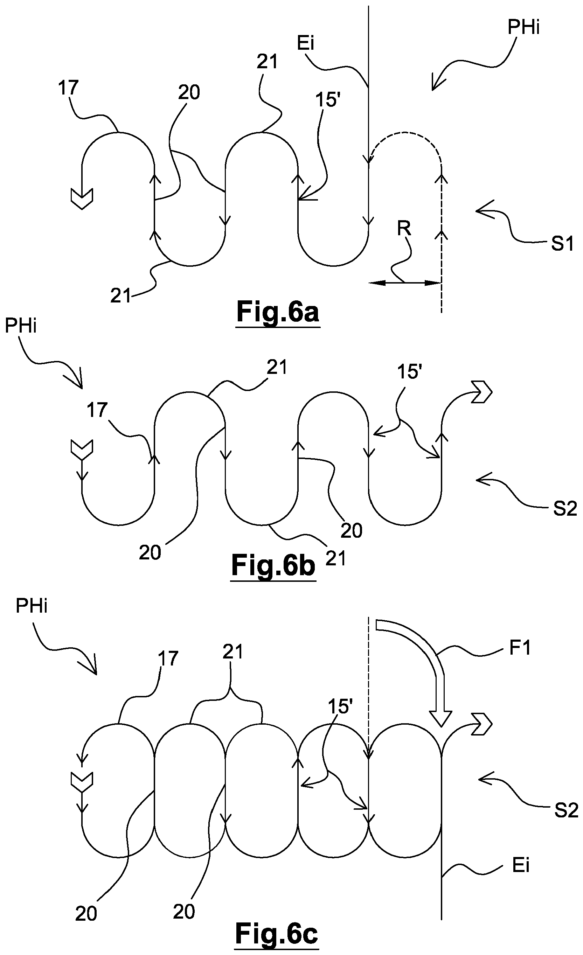

On décrit ci-après, en référence aux figures 6a à 6c, le principe de bobinage permettant de masquer les entrées des enroulements de phase PH1-PH3, PH1'-PH3'. Afin d'en faciliter la compréhension, un seul enroulement de phase PHi a été représenté mais les étapes sont généralisables à l'ensemble des enroulements de phase PH1-PH3, PH1'-PH3'. En outre, il n'a été représenté qu'un seul conducteur 17 bien que le bobinage 14 soit réalisé de préférence deux fils en main par phase (cf. conducteurs 17a, 17b).

Le principe consiste à réintroduire dans le bobinage les entrées de phase Ei seulement une fois qu'au moins la première spire S1 intérieure a été bobinée. Plus précisément, comme on peut le voir sur la figure 6a, par rapport au positionnement final des entrées, chaque enroulement de phase PHi est commencé avec un retard R, par exemple de l'ordre de 30°, sur l'évolution du bobinage, ce qui correspond à une demi-onde. L'extrémité d'entrée Ei est ici maintenue à l'extérieur des encoches 15' pendant le bobinage de la première spire S1 et d'au moins une partie de la deuxième spire S2 (cf. figure 6b). Dans chaque spire S1, S2, les portions actives 20 sont positionnées à l'intérieur des encoches 15' de la série dédiée audit enroulement de phase PHi.

Les portions actives 20 sont chacune dans une encoche 15'. La portion active 20 qui s'étend de l'entrée Ei, appelée portion active cachée est dans une encoche 15' appelée encoche 15' cachée. La portion de liaison 21 s'étendant de la portion cachée est appelée portion de liaison d'entrée. La première portion active 20 s'étendant de la portion de liaison d'entrée 21 est dans une première encoche 15'. Il s'en suit que la portion de liaison d'entrée 21 se situe entre la portion active cachée et la première portion active 20. La seconde portion active 20 qui s'étend de la première portion de liaison 21 qui s'étend de la première portion active 15', se situe dans une seconde encoche 15' et ainsi de suite N fois. Chaque phase comprend sa première encoche, sa seconde encoche etc...

Une fois la première spire S1 réalisée et au moins une portion active située dans l'encoche cachée de la deuxième spire S2, la portion active cachée de l'enroulement de phase PHi correspondant à une entrée Ei est déposée dans l'encoche 15' correspondant au positionnement final, comme cela est représenté par la figure 6c (cf. flèche F1). Dans ce mode de réalisation, la première encoche 15' se situe entre l'encoche cachée et la seconde encoche. L'encoche cachée est alors l'encoche N. Chaque extrémité d'enroulement de phase l'enroulement de phase PHi correspondant à une entrée Ei, est déposée dans l'encoche 15' correspondant au positionnement final. Les entrées de phase Ei sont alors entre deux portions de liaisons avec au moins une spire S1 qui les maintient et les empêche donc de se décoller des chignons 231, 232. On continue ensuite de réaliser des spires de bobinage jusqu'à obtenir le nombre de couches souhaité dans chaque encoche 15'.

Selon un autre exemple non représenté, une fois la spire S1 réalisée, chaque portion active cachée de chaque enroulement de phase PHi correspondant à une entrée Ei est déposée dans la seconde encoche 15' correspondant au positionnement final. Ainsi la seconde encoche 15' est l'encoche cachée 15' et la portion de liaison d'entrée est à l'opposée de la première portion de liaison.

Le nombre de spires Sj bobinées avant réintroduction des extrémités d'entrée de phase Ei pourra être variable. Ainsi, il sera possible de réaliser une spire ou plus avant réinsertion des entrées de phase Ei. Le nombre de spires bobinées Sj préalablement à l'insertion des entrées Ei correspond au nombre de couches situées à l'intérieur des encoches 15' avant le positionnement de l'entrée Ei. En conséquence, plus il y a de spires Sj bobinées avant l'insertion des entrées Ei, plus les entrées Ei se trouveront éloignées de la périphérie interne du stator 10.

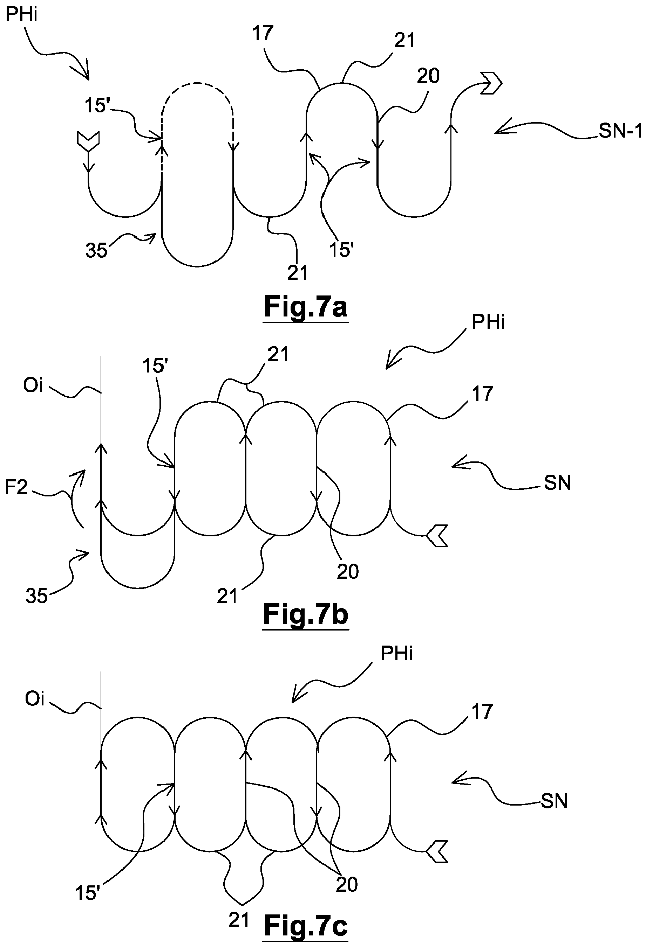

On décrit ci-après, en référence avec les figures 7a à 7c, les étapes de bobinage permettant de masquer les sorties Oi de chaque enroulement de phase PHi. Plus précisément, comme on peut le voir sur la figure 7a, une partie 35 de l'avant dernière spire SN-1 est bobinée en dehors du bobinage existant au niveau de l'encoche 15' destinée à recevoir l'extrémité de sortie Oi de l'enroulement PHi lors du bobinage de la dernière spire SN.

Comme cela est représenté sur la figure 7b, lors de la réalisation de la dernière spire SN, l'extrémité formant la sortie Oi est positionnée à l'extérieur de l'encoche 15' et la partie de spire 35 est insérée dans l'encoche suivant la flèche F2 de manière à recouvrir la sortie de phase Oi. Les sorties de phase Oi sont alors entre deux portions de liaison avec une spire SN qui les maintient et les empêche donc de se décoller des chignons 231, 232 (cf. figure 7c).

Le nombre de portion de spires 35 bobinées en dehors de l'outillage ou du stator pourra être variable. Ainsi, il sera possible de bobiner en dehors de l'outillage ou du stator deux parties de spire 35 ou plus avant de les rabattre sur la sortie Oi correspondante. Le nombre de parties de spires 35 bobinées en dehors de l'outillage ou du stator correspond au nombre de couches situées à l'intérieur des encoches après le positionnement de la sortie Oi. En conséquence, plus il y a de parties de spires 35 bobinées en dehors de la broche, plus les sorties Oi se trouveront éloignés de la périphérie externe du stator 10 après recouvrement.

Il est à noter également que le bobinage 14 obtenu est de type ondulé réparti. En effet, on observe sur les figures 2, 6c et 7c, que pour deux encoches 15 adjacentes d'une série d'encoches 15' associée à un enroulement de phase PHi, le bobinage 14 présente deux portions de liaison 21 situées de part et d'autre du stator 10 reliant des portions actives 20 d'une des encoches 15 adjacentes à celles de l'autre. Un tel type de bobinage permet d'améliorer les performances magnétiques de la machine électrique.

En outre, du fait du bobinage simultané des six enroulements de phase PH1-PH3, PH1'-PH3' comportant une pluralité de spires, chaque enroulement PHi comporte au moins une portion de liaison 21 située radialement entre deux portions de liaison 21 de deux autres enroulements.

En bobinant de la même manière les six enroulements de phase PH1-PH3, PH1'-PH3', on obtient six enroulements de phase masqués, c'est-à-dire six enroulements de phase PH1-PH3, PH1'-PH3' ayant des entrées Ei et des sorties Oi qui ne sont pas positionnés dans les couches extrêmes des encoches 15 et qui sont donc masquées par les autres enroulements de phase PH1-PH3, PH1'-PH3' du bobinage.

En variante, il est possible de bobiner comme précédemment indiqué une partie des enroulements de phase PH1-PH3, PH1'-PH3' de manière à ce qu'ils présentent leur entrée Ei et leur sortie Oi de phase masquées. En variante, uniquement les entrées Ei ou les sorties Oi des enroulements de phase PH1-PH3, PH1'-PH3' sont masquées. Le choix du nombre d'enroulements de phase PH1-PH3, PH1'-PH3' dont les entrées Ei et/ou les sorties Oi seront masquées dépend de l'application.

Le bobinage 14 est réalisé en l'occurrence sur un outillage avant d'être transféré vers les encoches 15 du stator 10. En variante, le bobinage 14 pourra être réalisé sur un stator à plat avant d'être recourbé pour former un stator annulaire suivant une méthode dite de "bending" en anglais.

L'homme du métier pourra se référer au document FR2947968 pour plus de détails sur la réalisation du procédé de bobinage mis en oeuvre dans l'invention.

Bien entendu, la description qui précède a été donnée à titre d'exemple uniquement et ne limite pas le domaine de l'invention dont on ne sortirait pas en remplaçant les détails d'exécution par tous autres équivalents.

## Revendications

1. Stator (10) de machine électrique tournante, notamment pour véhicule automobile, comportant:
- un corps de stator (11) ayant un axe central (X), ledit corps de stator (11) comportant un ensemble d'encoches (15),
- un bobinage (14) bobiné dans lesdites encoches (15) dudit corps de stator (11) formant un premier chignon (231) et un second chignon (232) s'étendant axialement de part et d'autre dudit corps de stator (11),
- ledit bobinage (14) comportant des enroulements de phases (PH1-PH3, PH1'-PH3') dans lequel chaque enroulement de phase (PH1-PH3, PH1'-PH3') est formé par au moins un conducteur électrique continu (17a, 17b) passant dans une série d'encoches (15) de l'ensemble, ledit enroulement de phase (PH1-PH3, PH1'-PH3') comprenant au moins deux spires (S1, S2),
- chaque enroulement de phase (PHi) comportant:
- des portions actives (20) positionnées chacune dans une encoche (15) de la série d'encoches, lesdites portions actives (20) formant dans chaque encoche (15) de la série des couches successives radiales (C1-CN),
- des portions de liaison (21), chaque portion de liaison (21) formant une partie d'un des chignons (231, 232), chacune des portions de liaison (21) s'étendant, hors des encoches (15), d'un seul côté dudit corps de stator (11), à partir de l'une des portions actives (20) vers une autre portion active (20) d'une encoche (15) successive de la série d'encoches,
- une première extrémité (Ei) et une deuxième extrémité (Oi) s'étendant à partir de l'une des portions actives (20), à l'extérieur des encoches (15),
**caractérisé en ce que**, au moins un des enroulements de phase (PH1-PH3, PH1'-PH3') est un enroulement masqué lequel comprend toutes ses portions actives (20) de la couche (C1, CN) située à l'au moins une des extrémités radiales de chaque encoche (15) de la série prolongées chacune d'une part par une portion de liaison (21) correspondante du premier chignon (231) et d'autre part par une portion de liaison (21) correspondante du second chignon (232).

2. Stator selon la revendication 1, **caractérisé en ce que** ledit bobinage (14) comporte au moins un système (PH1-PH3) comportant au moins trois enroulements masqués.

3. Stator selon la revendication 1 ou 2, **caractérisé en ce que** ledit bobinage (14) comporte au moins deux systèmes (PH1-PH3, PH1'-PH3') comportant chacun trois enroulements masqués.

4. Stator selon la revendication 3, **caractérisé en ce que** les sorties de phases du premier système triphasé sont décalés de 125 degrés des sorties de phases du deuxième système triphasé (PH1-PH3, PH1'-PH3').

5. Stator selon l'une quelconque des revendications 1 à 4, **caractérisé en ce que** chaque enroulement masqué (PHi) comporte au moins deux conducteurs électriques continus (17a, 17b).

6. Stator selon l'une quelconque des revendications 1 à 5, **caractérisé en ce que** le au moins un enroulement masqué (PHi) comprend N couches dans chaque encoche (15), une première couche (C1) la plus éloignée dudit axe central (X) et une N iéme couche (CN) la plus proche dudit axe central (X) et **en ce qu'**au moins les deux extrémités (Ei, Oi) du conducteur (17a, 17b) de l'enroulement de phase (PHi) se prolonge chacune à partir d'une portion active (20) correspondante située entre la première couche (C1) comprise et la N-1 iéme couche (CN) comprise.

7. Stator selon l'une quelconque des revendications 1 à 6, **caractérisé en ce qu'**au moins un enroulement masqué (PHi) est agencé pour que chaque encoche (15) comporte une couche proche, dite dernière couche ou couche proche, qui est la couche (CN) la plus proche de l'axe central (X) par rapport aux autres couches, et **en ce que** toutes les portions actives (20) situées dans une couche proche (CN) sont prolongées chacune d'une part par une portion de liaison (21) correspondante du premier chignon (231) et d'autre part par une portion de liaison (21) correspondante du second chignon (232).

8. Stator selon l'une quelconque des revendications 1 à 7, **caractérisé en ce qu'**au moins un enroulement masqué (PHi) est agencé pour que chaque encoche (15) comporte une couche éloignée (C1), dite première couche, qui est la couche la plus éloignée de l'axe central (X) par rapport aux autres couches, et **en ce que** les portions actives (20) situées dans les couches éloignées des encoches (15)sont prolongées chacune d'une part par une portion de liaison (21) correspondante du premier chignon (231) et d'autre part par une portion de liaison (21) correspondante du second chignon (232).

9. Stator selon l'une quelconque des revendications 1 à 8, **caractérisé en ce que** chaque enroulement de phase (PH1-PH3, PH1'-PH3') comporte une portion de liaison (21) située radialement entre deux portions de liaison (21) de deux autres enroulements de phase.

10. Stator selon l'une quelconque des revendications 1 à 9, **caractérisé en ce que** ledit bobinage (14) est de type ondulé reparti.

11. Stator selon l'une quelconque des revendications 1 à 10, **caractérisé en ce que** ledit corps de stator (11) est formé par un empilage de tôles.

12. Stator selon l'une quelconque des revendications 1 à 11, **caractérisé en ce que** lesdites encoches (15) sont à bord parallèles.

13. Machine électrique tournante **caractérisée en ce qu'**elle comporte un stator (10) tel que défini selon l'une quelconque des revendications précédentes.
